# DEMANDE DE BREVET EUROPEEN

(11) **EP 1 211 380 A1**
(43) Date de publication de la demande: **05.06.2002**
(21) Numéro de dépôt: 00126046.2
(22) Date de dépôt: 29.11.2000
(51) Int. Cl.: E06B 9/76, F16D 7/02, F16H 1/16

(54) **Treuil à vis sans fin pour store ou volet roulant**

(71) Demandeur: Cherubini S.p.A., 25080 Carzago di Calvagese, Riviera/Brescia (IT)
(72) Inventeur: Cherubini, Italo, 1220 Les Avanchets (CH)
(74) Mandataire: Micheli & Cie

(57) **Abrégé**

La présente invention concerne un treuil pour la manoeuvre d'un store ou d'un volet roulant comprenant, logée dans un boîtier (1), une vis sans fin (2) destinée à coopérer en position de service avec une manivelle et engagée avec une roue dentée (3) hélicoïdale, elle-même accouplée de manière fixe en rotation avec l'axe d'entraînement du store ou volet roulant. La vis sans fin (2) est munie d'un dispositif de freinage qui comporte à chaque extrémité axiale de la vis sans fin (2) une rondelle (6) solidaire en rotation avec ladite vis et disposée entre deux paliers (7,8) en matériau thermoplastique, fixes par rapport au boîtier (1), et de telle sorte que la poussée axiale en position de service résultant de l'accouplement hélicoïdal entre la vis sans fin et la roue dentée comprime chaque rondelle entre deux paliers et exerce ainsi par frottement une action de freinage de la vis sans fin.

## Description

La présente invention concerne un treuil pour la manoeuvre d'un store ou d'un volet roulant, qui comprend logée dans un boîtier une vis sans fin, destinée à coopérer avec une manivelle et engagée avec une roue dentée hélicoïdale, elle-même accouplée de manière fixe en rotation avec l'axe d'entraînement du store ou volet roulant ou à rouleau.

Le type précité de treuil dit à vis sans fin est déjà connu et nécessite la présence d'un système de freinage de la vis sans fin, de manière à empêcher que le store ou volet roulant ne puisse descendre seul sous l'effet de son propre poids. De tels systèmes de freinage existent déjà, par exemple avec des ressorts agissant sur la vis sans fin, mais ces systèmes sont soit insuffisamment efficaces, soit trop complexes et/ou onéreux.

Le but de la présente invention consiste donc à fournir un treuil à vis sans fin pour store ou volet roulant du type précité, et qui comporte un dispositif de freinage de ladite vis sans fin qui soit à la fois efficace, de construction simple et peu onéreux.

Le treuil à vis sans fin pour volet roulant ou store, objet de cette invention et visant à atteindre le but précité, comprend un dispositif de freinage qui est caractérisé par le fait qu'il comporte à chaque extrémité axiale de la vis sans fin au moins une rondelle solidaire en rotation avec ladite vis et disposée chacune entre deux paliers en matériau thermoplastique fixes par rapport au boîtier, de telle sorte que la poussée axiale en position de service résultant de l'accouplement hélicoïdal entre la vis sans fin et la roue dentée comprime chaque rondelle entre deux paliers et exerce ainsi par frottement une action de freinage de la vis sans fin.

Une forme d'exécution du treuil à vis sans fin selon la présente invention sera maintenant décrite à titre d'exemple en référence aux dessins annexés.

La figure 1 en est une vue schématique en plan et partiellement en coupe.

Les figures 2 et 3 sont des vues partielles en coupe selon les lignes respectivement AA et BB.

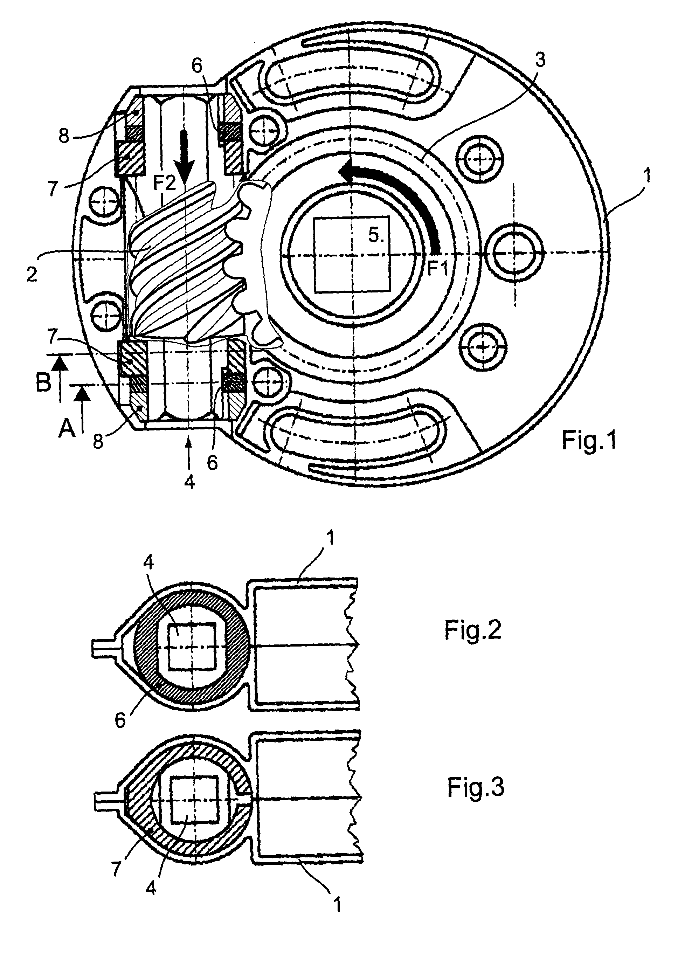

Le treuil pour volet roulant ou store illustré à titre d'exemple sur la figure 1 comporte un boîtier 1 dans lequel est logée une vis sans fin 2 dont le filetage hélicoïdal est engagé avec celui d'une roue dentée 3 disposée perpendiculairement à la vis sans fin 2. Cette vis sans fin 2 présente une ouverture axiale 4 de forme, destinée à coopérer en position de service avec une manivelle (non montrée) pour la manoeuvre du store ou du volet roulant. La roue hélicoïdale 3 présente également une ouverture de forme 5, perpendiculaire à son plan, accouplée de manière fixe en rotation avec l'axe d'enroulement respectivement de déroulement (non illustré) du store ou volet roulant.

De préférence, les éléments constitutifs du treuil tels que décrits ci-dessus sont en métal, par exemple en aluminium ou alliage d'aluminium pour le boîtier 1 et la vis sans fin 2, et en laiton pour la roue dentée hélicoïdale 3.

La vis sans fin 2 est en outre munie d'un dispositif de freinage qui comprend à proximité de chacune de ses extrémités une rondelle métallique 6, par exemple en aluminium ou alliage d'aluminium, solidaire en rotation avec ladite vis sans fin 2 (voir figure 2). Chaque rondelle 6 est disposée entre deux paliers 7,8 (voir figure 3), qui sont fixes par rapport au boîtier 1, et qui sont réalisés en un matériau thermoplastique, par exemple en Hytrel® . Ces paliers 7, 8 servent également de guides pour la vis sans fin, 2 en plus de leur fonction d'organes de freinage.

Selon une réalisation non illustrée, le dispositif de freinage de la vis sans fin peut comporter à chacune de ses extrémités deux ou plusieurs rondelles solidaires de la vis disposées chacune entre deux ou plusieurs paliers fixes par rapport au boîtier.

Lors de la manoeuvre d'un store ou volet roulant, et à part la position où ledit store ou volet roulant est totalement baissé, le poids dudit store ou dudit volet roulant entraîne celui-ci vers le bas lorsque le mouvement d'entraînement actionnant la vis sans fin est stoppé, ce qui justifie la présence du dispositif de freinage tel que décrit ci-dessus.

En ce qui concerne le fonctionnement de ce dispositif de freinage, il est le suivant : lors de la descente du store ou volet roulant, la rotation de son axe fait tourner la roue dentée 3 (flèche F1); celle-ci étant engagée avec la vis sans fin 2 de manière oblique, à cause de l'angle d'hélice de celle-ci, la poussée axiale résultante (flèche F2) exerce une pression comprimant chaque rondelle 6 entre les deux paliers 7, 8; le frottement engendré sur les surfaces planes de ces éléments, en métal pour la rondelle 6 et en un matériau thermoplastique pour les paliers 7, 8, est suffisant pour freiner le store ou volet roulant, de telle sorte que celui-ci reste dans n'importe quelle position dès que le mouvement de montée ou de descente est stoppé.

En plus de son efficacité, le dispositif de freinage du treuil selon l'invention présente l'avantage de permettre l'utilisation pour fabriquer la vis sans fin et la roue dentée d'une barre d'aluminium, d'alliage d'aluminium ou de laiton profilée, présentant déjà une ouverture axiale de forme (carrée ou hexagonale), et ainsi de réaliser une économie substantielle à la fabrication, alors que l'usure engendrée dans les systèmes de freinage connus à ressorts sur la vis sans fin conduit à la nécessité de réaliser une vis sans fin en acier trempé par exemple.

## Revendications

1. Treuil pour la manoeuvre d'un store ou d'un volet roulant comprenant, logée dans un boîtier, une vis sans fin destinée à coopérer en position de service avec une manivelle et engagée avec une roue dentée hélicoïdale, elle-même accouplée de manière fixe en rotation avec l'axe d'entraînement du store ou volet roulant, et ladite vis sans fin étant munie d'un dispositif de freinage, **caractérisé par le fait que** le dispositif de freinage de la vis sans fin comporte à chaque extrémité axiale de la vis sans fin au moins une rondelle solidaire en rotation avec ladite vis et disposée entre deux paliers au moins, en matériau thermoplastique, fixes par rapport au boîtier, et de telle sorte que la poussée axiale en position de service résultant de l'accouplement hélicoïdal entre la vis sans fin et la roue dentée comprime chaque rondelle entre deux paliers et exerce ainsi par frottement une action de freinage de la vis sans fin.

2. Treuil selon la revendication 1, **caractérisé par le fait que** la roue dentée est disposée perpendiculairement à l'axe de la vis sans fin.

3. Treuil selon la revendication 1 ou la revendication 2, **caractérisé par le fait que** la vis sans fin et la roue dentée présentent un passage axial de forme.

4. Treuil selon l'une des revendications 1 à 3, **caractérisé par le fait que** le dispositif de freinage comprend, à chaque extrémité de la vis sans fin, une rondelle solidaire de ladite vis disposée entre deux paliers fixes par rapport au boîtier.

5. Treuil selon l'une des revendications 1 à 3, **caractérisé par le fait que** le dispositif de freinage comprend, à chaque extrémité de la vis sans fin, deux ou plusieurs rondelles solidaires de ladite vis disposées chacune entre deux ou plus paliers fixes par rapport au boîtier.

6. Treuil selon l'une des revendications 1 à 5, **caractérisé par le fait que** la vis sans fin est réalisée en aluminium ou en un alliage d'aluminium et que la roue dentée est réalisée en laiton.

7. Treuil selon l'une des revendications 1 à 6, **caractérisé par le fait que** chaque rondelle du dispositif de freinage est en métal, et que chaque palier de freinage de ce dispositif est réalisé en un matériau thermoplastique.
